Europäisches Patentamt

European Patent Office

Office européen des brevets

(11) Publication number: **0 206 608 B1**

# EUROPEAN PATENT SPECIFICATION

(45) Date of publication of patent specification: **08.09.93**    (51) Int. Cl.5: **H01M 8/06, C01B 3/32**

(21) Application number: **86304371.7**

(22) Date of filing: **09.06.86**

(54) **Fuel cell integrated with steam reformer.**

(30) Priority: **10.06.85 US 743204**
**10.06.85 US 743714**

(43) Date of publication of application:
**30.12.86 Bulletin 86/52**

(45) Publication of the grant of the patent:
**08.09.93 Bulletin 93/36**

(84) Designated Contracting States:
**AT BE CH DE FR GB IT LI LU NL SE**

(56) References cited:
EP-A- 0 010 779      EP-A- 0 018 700
BE-A- 657 241        DE-A- 2 640 456
FR-A- 1 553 361      GB-A- 2 135 295
US-A- 3 179 500      US-A- 3 469 944
US-A- 4 588 659

CHEMICAL ABSTRACTS, vol. 77, no. 2, 10th
July 1972, page 166, left-hand column, ab-
stract no. 7898x, Columbus, Ohio, US; H.J.
HENKEL et al.: "Production of hydrogen by
steam reforming", & JOURNEES INT. ETUDE
PILES COMBUST., C. R., 3rd 1969, 273-9

(73) Proprietor: **UNITED STATES DEPARTMENT OF ENERGY**
**1000 Independence Avenue S.W.**
**Washington, D.C. 20585(US)**

(72) Inventor: **Beshty, Bahjat S.**
**1208 Yardley Road**
**Lower Makefield Pennsylvania(US)**
Inventor: **Whelan, James A.**
**16 Cooper Drive**
**Howell Township New Jersey 07731(US)**

(74) Representative: **Thomson, Paul Anthony et al**
**Potts, Kerr & Co. 15, Hamilton Square**
**Birkenhead Merseyside L41 6BR (GB)**

Rank Xerox (UK) Business Services
(3.10/3.6/3.3.1)

**Description**

1. Field of the Invention

This invention relates to a fuel cell system integrated to utilize hydrogen produced by steam reforming of methanol as well as a method and apparatus for producing a hydrogen containing gas by steam reforming of methanol. This reformer is particularly suitable for use in an integrated fuel cell system for producing electric power from methanol.

2. The Prior Art

Fuel cells generate electricity through galvanic combustion of fuel process gas with oxidant process gas. Typically oxidant gas can be obtained from the fuel cell environment with little, if any, processing. The fuel process gas, on the other hand, is usually hydrogen and its generation requires processing of other fuels such as methanol. Direct oxidation of fuels such as methanol in fuel cells at practical current densities with acceptable catalyst loadings is not as economically attractive as conversion of methanol fuel to a hydrogen-rich mixture of gases via steam reforming and subsequent electrochemical conversion of the hydrogen-rich fuel stream to direct current in the fuel cell.

In addition, during recent years, industrial requirements for hydrogen have increased rapidly, and a variety of processes for the manufacture of hydrogen have been developed to fill this need. Large quantities of hydrogen are used, for example, in synthesis of ammonia; for catalytic hydrogenation, for example, of oils to solid fats; in petroleum processes such as hydrofining; and as a fuel, e.g. in missiles and in fuel cells for the generation of electricity.

A very attractive fuel cell system currently undergoing commercial consideration is the reformed methanol fuel-phosphoric acid electrolyte-air system. Primary advantages of phosphoric acid electrolyte ( 85 wt. %) include ability to operate with fuel and ambient air containing $CO_2$, ability to operate with a thin matrix electrolyte (no liquid circulation) and chemical stability of the electrolyte over the operating temperature of the cell, e.g. 180-200°C.

The fuel cell itself is only part of the overall system, and other components of the system, e.g., generation of hydrogen fuel, are likewise important in terms of overall system size and cost effectiveness.

In one method used by the art to produce hydrogen by steam reforming, a methanol and steam feedstock is passed through catalyst filled tubes disposed within a reactor or reformer which is shaped much like a conventional shell and tube heat exchanger except that the tubes contain catalysts. In these reactors, hot gases (typically combustion products) are passed through the shell of the heat exchanger while the methanol and water vapor is passed through the tubes. Thus, the heat required for the endothermic catalytic reforming reaction taking place within the tubes at about 300°C must pass through the wall of the tube. In these prior art processes, the mixture of methanol and steam is converted to a gaseous stream consisting primarily of hydrogen (about 68%) and $CO_2$ (about 21.7%), CO (about 1.5%) and $H_2O$ (about 8.8%). In order to improve the thermal and chemical efficiency of such reactors, efforts have been directed to improve the uniformity of heat distribution in the tubes within the reactor to secure high chemical conversion of fuel into hydrogen and maintain catalyst bed temperature within certain limits (>700°F) in order to avoid premature catalyst aging while minimizing the amount of energy used to produce each unit of hydrogen containing gas.

For the most efficient operation of the steam reforming reaction, large surface areas are required to transfer the heat from the combusted gases to the tubes. In reformers presently used for steam reforming, small diameter reaction tubes are clustered closely together in the furnace so that heat transfer from the combusting gases in the reactor into the catalyst packed tubes is optimized.

The use of a plurality of tubes to accomplish heat transfer contributes to the large size and high cost of the reformer. A second drawback to such reformers is that the heat for the steam reforming process is provided indirectly by means of heat transfer through tube walls. This inefficient heat transfer has a detrimental effect in fuel cell systems in which the reformer and the fuel cell are fully integrated, i.e the combustion gases for the reforming reaction are derived from the fuel cell exhaust since the shell side heat transfer coefficient between the hot gas and the tube is characteristically low and hence, the rate of reaction is limited primarily by the rate of heat transfer. This problem is particularly severe at the reactor entrance as the rate of the endothermic reaction is very high, and thus, the amount of heat required is very high while the shell side heat transfer coefficient is often low as the mechanical design of typical reactors often allows the gases in the shell to be relatively stagnant near the tube entrances. This leads to a drop in the overall efficiency as a large portion of each reactor tube operates at an undesirably low temperature. Thus, in order

2

to effect complete conversion, the reformer must be relatively large and expensive since, at the inlet of the reformer, it is impossible, because of the highly endothermic nature of the reaction, to supply enough heat to the surface area of the reformer tubes so there tends to be a large decrease in reactant temperature in the area adjacent the inlet.

FR-A-1553361 disclsoses reforming methanol inside the anode chamber of a fuel cell by means of a suitable reforming catalyst. The fuel is said to be at a temperature of 149°C to 232°C.

DE-A-2640456 discloses a hydrogen generator, starting from a methanol/steam mixture, which uses at least two different catalysts in separate sections.

It is the primary object of the present invention to provide a novel process and apparatus for the production of hydrogen by steam reforming of methanol that can be accomplished with a thermally efficient reformer of reduced size and cost which can be integrated with a fuel cell power system or used as a stand alone hydrogen generator.

According to the present invention, production of hydrogen by steam reforming of methanol or other hydrocarbon fuels is accomplished in a reformer of substantially reduced size by superheating a gaseous mixture of water and methanol to a temperature of about 371° to about 593°C (about 700° to about 1100°F.) and then passing the superheated gaseous mixture over a catalyst bed contained in a reformer. At least a substantial portion of the heat for the endothermic steam reforming reaction is provided by the sensible heat in the super heated steam/methanol stream augmented by heat transferred through the tube wall depending on the overall system considerations. The concept of providing a substantial portion of the heat for the endothermic reforming reaction by sensible heat in the superheated steam/methanol stream is referred to hence forth as "direct heating."

Direct heating is of considerable advantage as it largely overcomes the problems encountered with reaction rates being limited by the rate of heat transfer through the tube wall especially near the reformer entrance and thus, for a given conversion, the reactor may be smaller, more efficient and less expensive. As compared to the prior art, high steam to methanol ratios are required for direct heated reformers, typically in the range of from 1 to as high as 10. The relatively large amounts of steam passed through the bed continuously clean the catalyst by removing ethanol and suppressing production of carbon monoxide and retard catalyst poisoning thereby enhancing catalyst stability.

Direct heated reformers are particularly suitable for integration with fuel cells as the heat and fuel values contained in exhaust stream from each component can be utilized in the other. Hydrogen contained in the exhaust gas from the fuel cell anode may be burned to superheat the methanol/water mixture being fed to the reformer. In some embodiments, once the reactor is warmed up, the entire fuel requirements for the system are provided by the methanol being fed to the reformer.

As a result of direct heating of the reformer feed gases augmenting indirect heat transfer through the wall of the reactor, a shell-and-multiple tube reactor arrangement or other means of increasing the heat transfer surface is not always required and the complexity and overall volume of the reformer can be substantially reduced. Another aspect of this invention is based upon the realization that an efficient practical integrated reformer-fuel cell system and process can be achieved by using a superheater, an essentially adiabatic methanol reformer and a fuel cell wherein the various exhaust streams from the components are utilized with other components of the system. In this system, the water to methanol ratio and temperature of the stream leaving the superheater are of such values that substantially all (at least about 75%, preferably 90%) of the heat required for the endothermic reforming reaction is contained within the reaction stream itself and, at most, only a small portion of the heat required for reforming is supplied through the wall of the reforming reactor. In addition to the reformer size reduction achieved by the use of direct heating, a further reduction in reactor size is achieved by use of an essentially adiabatic reactor since it is highly advantageous to integrate the direct heating steam reforming process with a fuel cell to form a fuel cell system whereby a continuous supply of hydrogen could be provided to the fuel cell from an essentially adiabatic steam reformer, the gases exhausted from the anode of the fuel cell providing thermal energy via combustion for superheating the water/methanol mixture.

It is therefore a primary object of the present invention to efficiently integrate a fuel cell with the steam reforming process to provide a thermochemical process for producing electrical energy in which the heat required for the endothermic reforming reaction is contained substantially completely within the stream fed to the reformer which produces hydrogen for a fuel cell so that a compact and efficient system may be obtained.

The above object of the invention is achieved in accordance with the fuel cell system of the present invention comprised of a heat exchanger, a burner, an adiabatic steam reformer and a fuel cell wherein a superheated mixture of water and methanol is first converted by an essentially adiabatic endothermic catalytic reforming reaction to hydrogen. The hydrogen, generated in the reformer, is directed to the fuel electrode of the fuel cell, and air is directed to the oxygen electrode to effect an electrochemical reaction to produce electricity and gaseous reaction products. A portion of the exhaust gases from the fuel electrode is combustible as it contains unreacted hydrogen. Furthermore, it is desirable to withdraw this portion of gas from the fuel cell to maintain a hydrogen-rich stream in the fuel cell thus optimizing fuel cell operation in accordance with the present state of the fuel cell art. The combustible gas exhausted from the fuel electrode is burned in the burner, the exhaust of which is fed to the heat exchanger to supply heat for superheating the water/methanol mixture fed to the reformer. Even though large amounts of water are used in the system and thus more heat is required to vaporize and preheat these methanol water mixtures containing large amounts of water, the heat generated can be effectively recovered and used in the system and process of the present invention. Further, parasitic power requirements are decreased, and the low concentration of carbon monoxide in the reformate should lead to improved fuel cell efficiency and extended fuel cell life, so the net methanol demand remains essentially constant or may decrease slightly (around 20%). Thus, the net energy production is at lease substantially equivalent to that obtained using mixtures containing lesser amounts of water.

## DETAILED DESCRIPTION OF THE INVENTION

Having set forth its general nature, the invention will best be understood from the subsequent more detailed description wherein reference will be made to the accompanying drawings which illustrate systems suitable for practicing the present invention.

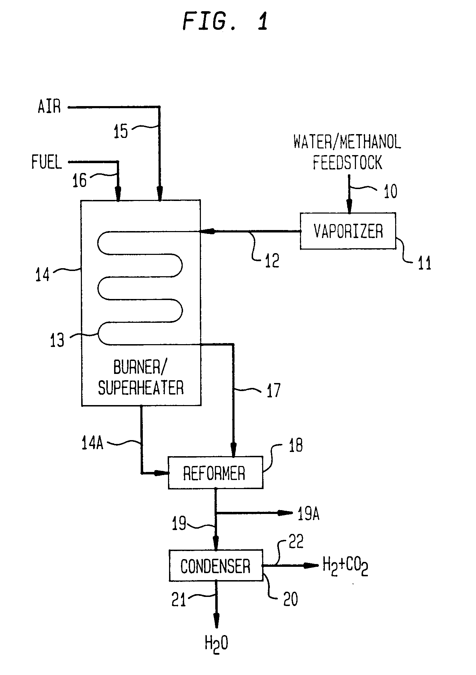

Reference is now made to Figure 1 of the drawings which schematically illustrates a flow scheme in accordance with this invention of the steam reforming of methanol for the production of hydrogen therefrom. As illustrated in Figure 1, a water and methanol feedstock having a water/methanol mole ratio ranging from about 1.0 to about 10.0, preferably about 2.0 to about 9.0, and more preferably about 2.5 to about 4.0, is supplied via conduit 10 to vaporizer 11 wherein the water/methanol feed supplied thereto is heated to a temperature of about 200 to about 500°F to convert the feedstock into a gaseous mixture. The hot gaseous steam/methanol stream then exits the vaporizer via line 12 and is supplied to superheater coil 13 contained in burner 14. The gaseous mixture contained in coil 13 is superheated to a temperature of about 371° to about 593°C (about 700 to about 1100°F), and preferably about 454° to about 538°C (about 850°F to about 1000°F), the fuel for heating the mixture being supplied to burner 14 via conduit 16 together with an oxidizing gas such as air or another oxygen containing gas via conduit 15. When the reforming system is integrated with a fuel cell, the fuel burned in the burner 13 includes unreacted hydrogen gas exhausted from the anode side of the fuel cell which undergoes combustion with an oxidizing gas such as air or oxygen. In one embodiment of the inventory, the temperature and composition of the methanol/steam mixture leaving the superheater are such that at most only minimal additional heat will be required to obtain essentially complete conversion of the methanol contained therein. Table I sets forth the variation in weight hourly space velocity (and thereby reactor size) obtained by varying the methanol/water mole ratio of 4.5 to 9.0.

Table I

| WHSV | $H_2O$/MeOH | Reformer Inlet Temp. | % Conversion | Projected WHSV* for 99.8% Methanol Conversion |
|---|---|---|---|---|
| 1.5 | 4.5 | 482°C(900°F) | 84.6% | 0.45 |
| 1.5 | 9.0 | 482°C(900°F) | 96.2% | 0.789 |

* Weight hourly space velocity in units of gm methanol feed/gm catalyst/hr.

For purposes of the present invention, $H_2O$ to MeOH mole ratios of from about 2.5 to about 4.5 are preferred at temperatures of from about 482° to about 593°C (about 900° to about 1100°F). Gases resulting from the combustion reaction may exit burner 14 via line 14A to reformer 18 in contact with the outside of the catalyst bed. This would provide some additional heat to the reforming reaction and prevent heat loss from reactor 18, thereby reducing the size of reactor 18. In the embodiment in which all of the heat for the reforming reaction is supplied by preheating of the reformer feed gases, reformer 18 can be constructed in the form of a single tube having a length to diameter (aspect) ratio of less than 10:1, preferably less than 8:1, more preferably less than 6:1, most preferably from about 2:1 to about 6:1. The superheated steam/methanol gaseous mixture exits superheater coil 13 at a temperature of 454° to 538°C (850 to 1000°F) and a pressure of 0.101 to 1.03 MPa (14.7 to 150 psia) via line 17 and is supplied to reformer 18 at the desired superheated temperature and pressure.

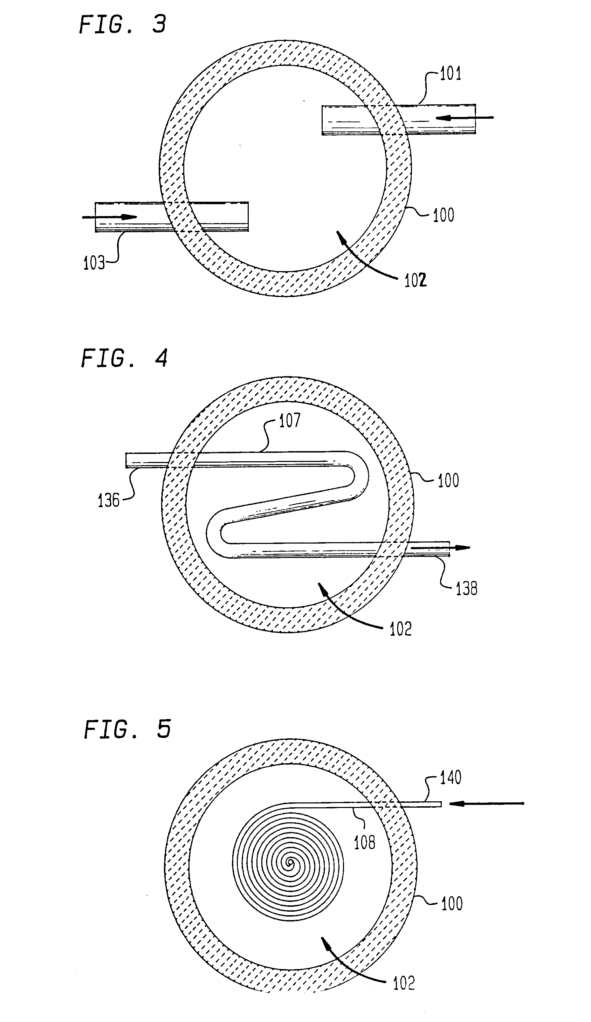

In another embodiment wherein a large portion of the heat for the endothermic reforming reaction passes through the tube wall, the reformer illustrated in Figure 3 having a multiplicity of tubes may be used.

The superheated steam/methanol gaseous mixture is reformed as it passes through a tube packed with a suitable catalyst (not shown) contained in reformer 18. The steam reforming catalyst is typically a metal or metal oxide supported on an inert ceramic material. For example, a suitable steam reforming catalyst is zinc oxide (e.g about 30 to 65% by weight zinc)/chromium oxide (about 5 to 35% by weight chromium) or a zinc oxide (about 5 to 20% by weight zinc)/copper oxide (about 15 to 40% by weight copper) combination supported on alumina (about 15 to 50% by weight).

It has been determined that steam reforming in accordance with the practice of the present invention is optimized and heating is accomplished more readily when the reformer tube is divided into two catalyst sections, i.e. a first section from the inlet to the reactor tube to an intermediate position in the reactor tube containing a catalyst which has relatively low activity but good resistance to high temperatures, such as zinc/chromium oxides and a second section extending from the end of the first section to the outlet area of the reactor tube containing a high activity catalyst such as copper/zinc oxides. Alternatively, the low activity, high temperature resistant catalyst may be used by itself.

In order to accommodate the endothermicity of the reforming reaction, heat is provided to reformer 18 as the sensible heat contained in the superheated gases. Thus, when methanol vapors and steam contact a catalyst such as a combination of zinc oxide and copper oxide at 500 to 900°F at atmospheric or higher pressure, methanol in effect decomposes to carbon monoxide and hydrogen while the carbon monoxide and steam correspondingly react according to the well known water gas shift reaction to form carbon dioxide and hydrogen as set forth below:

$$CH_3OH \text{ -------- } CO + 2H_2$$
$$CO + H_2O \text{ ------- } CO_2 + H_2$$

so that the overall reaction taking place in reformer 18 is:

$$CH_3OH + H_2O \text{ -------- } CO_2 + 3H_2$$

Thus, within reformer 18, methanol and steam react endothermically at high temperature to produce a gaseous product consisting primarily of steam, hydrogen and carbon dioxide which is recovered from reactor 18 and supplied via conduit 19 either to condenser means 20, wherein most of the water is removed from the gaseous hydrogen/carbon dioxide mixture by cooling the gaseous mixture to condense the water or directly via line 19a to the fuel cell. Where condensing means are used, water exits condenser 20 via line 21 and a gaseous mixture of hydrogen and carbon dioxide exits condenser 20 via line 22 and in this state may be supplied for direct utilization at the fuel side or anode of a fuel cell. If desired, the hydrogen/carbon dioxide mixture may be further fractionated, by means not shown, to recover separated quantities of hydrogen and carbon dioxide.

The introduction of superheated steam and methanol of the preferred temperatures and compositions into the catalyst bed in the reforming system, illustrated in Figure 1, permits the reforming apparatus to be made more compact, at least substantially narrower and with fewer reaction tubes than an apparatus relying on a standard feed of water and methanol which would require a large number of reaction tubes for producing an equivalent reforming effect. For many applications, the reformer can, if desired, be constructed in the form of a single tube. In a typical hydrogen production process using the reforming system illustrated in Figure 1, methanol is passed with steam over a catalyst at pressure typically ranging from 0.101 to 1.03 MPa (14.7 to 150 psia) and temperatures in the range of about 454° to about 538°C (about 850 to about 1000°F). Typical steam to methanol mole ratios ($H_2O$/carbon) are in the range of about 2.5:1 to about 4:1. The conversion of methanol may be effected in one pass over the catalyst bed contained in the reformer.

Figure 1 as described above, schematically shows small scale equipment for carrying out the methanol steam reforming process of the present invention. The foregoing principles are readily applicable to the design of large scale equipment for the production of hydrogen in accordance with well known techniques.

The system shown in Figure 1 for steam reforming methanol into hydrogen is particularly adapted for use in, and can be efficiently integrated with, a fuel cell system.

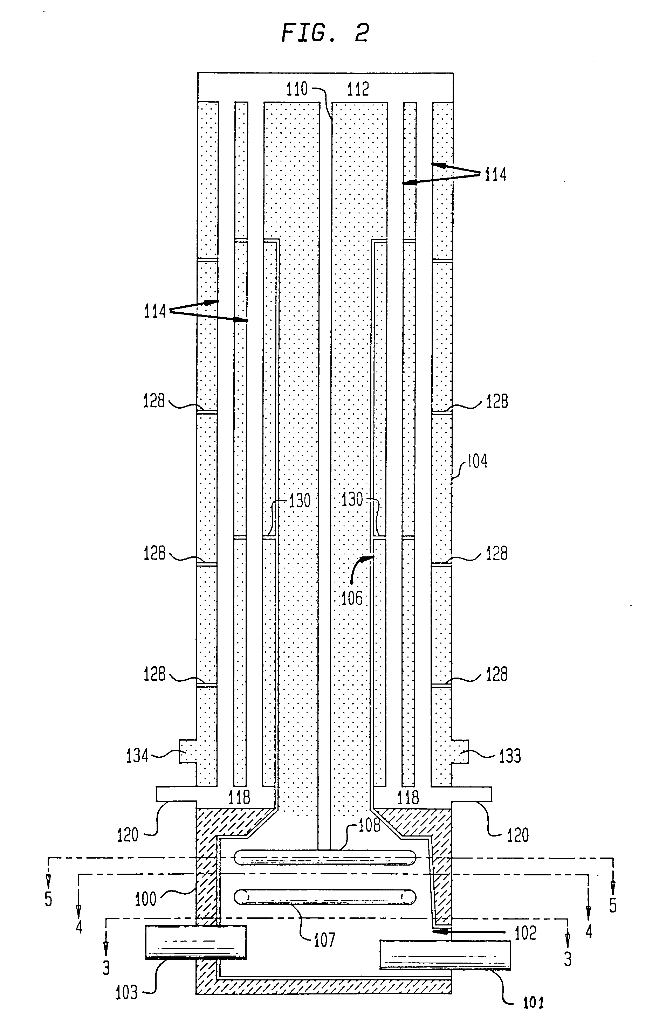

Figures 2, 3, 4 and 5 illustrate an assembly integrating a steam reformer, combustor, superheater and fuel cell air preheater in one compact unit. As illustrated in Figure 2, cylindrical housing 100 and defines combustion chamber 102 mounted adjacent to shell 104 having central duct 106 passing therethrough. Hydrogen supply duct 101 and methanol supply duct 103 lead into combustion chamber 102 to provide fuel for vaporizing and superheating the methanol water mixture. Air preheater tube 107 passes through combustion chamber 102 below superheater coils 108 disposed within combustion chamber 102 and operably connected to methanol supply/heater tube 110 passing through central duct 106 in shell 104. Methanol supply/heater tube 110 exits into methanol inlet plenum 112 opening into reformer tubes 114 leading to hydrogen exhaust plenum 118 having hydrogen exhaust ports 120 operably connected thereto. As illustrated in Figures 3 and 4, air preheater 107 is disposed below methanol steamfeed superheater coils 108 in combustion chamber 102 and is operably connected to the cathode of the fuel cell (not shown). In operation, a fuel-air mixture (such as hydrogen from the anode of a fuel cell) is introduced into combustion chamber 102 through combustor inlet duct 101, the exhaust from combustion chamber 102 flows cocurrently along methanol supply/heater tube 110 over reformer tubes 114, past baffles 128 and 130, then exits through combustor exhaust ports 132 and 134. Air for the cathode of the fuel cell enters air inlet port 136, passes through air preheater 107 situated in combustion chamber 102 and exits through air exhaust port 138. The methanol water mixture to be reformed enters through methanol inlet port 140, is superheated in superheater coils 108 located in combustion chamber 102, then is directed cocurrently upward with the combustion exhaust through methanol supply/heater tube 110 into methanol inlet plenum 112, thence through reformer tubes 114 and exits through hydrogen exhaust plenum 118 and hydrogen exhaust ports 120.

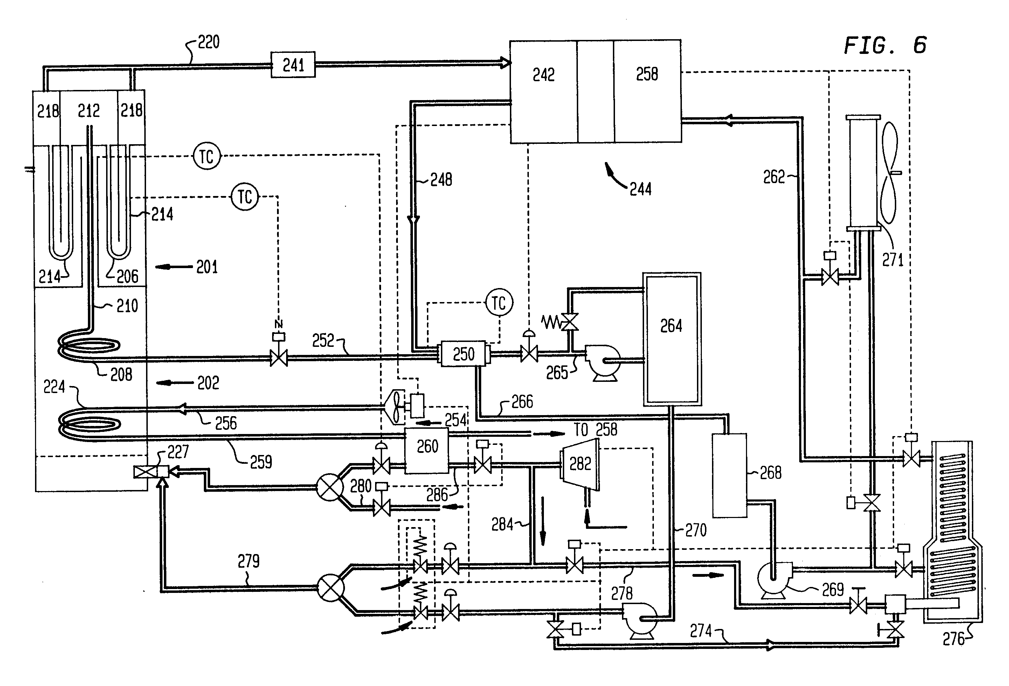

In figure 6, integrated heater reformer unit 201 is substantially the same as the integrated reformer unit illustrated in Figures 2 and 5 having combustion chamber 202 formed therein opening into central duct 206. Superheater coil 208 disposed within combustion chamber 202 is operably connected to methanol supply/heater tube 210 disposed within central duct 206 and opens into methanol intake plenum 212 joined by reformer tubes 214 to hydrogen exhaust planum 218 having hydrogen exhaust line 220 connected thereto leading to condenser 241 and thence to anode 242 of fuel cell 244. Hydrogen contained in the exhaust from anode 242 of fuel cell 244 is removed by means not shown and is fed to combustion chamber 202 through line 280 and burner 227. Fuel cell coolant circulates through fuel cell 244 removing excess heat therefrom, line 248 conducts the fuel cell coolant to evaporator 250 which vaporizes the water methanol feed supplied to superheater 208 through line 252. Air preheater coil 224, disposed within combustion chamber 202, heats air entering through inlet 254 connected to line 256 then returns it to cathode chamber 258 of fuel cell 244 through heat exchanges 260 and means not shown. Heat exchanger 260 also serves to preheat combustion air passing through line 286 and burner 227. Methanol and water mix to be reformed into hydrogen and converted in fuel cell 244 is stored in tank 264 connected to evaporator 250 by line 265. Fuel cell coolant from evaporator 250 passes through line 266 to coolant tank 268 which stores coolant for use in the cooling system used to remove excess heat from fuel cell 244. During steady operation, excess heat is removed from the coolant in air cooler 271, bypassing start-up furnace 276. Fuel for combustion chamber 202 leaves tank 264 through line 270 leading to combustor 202 through line 279. For start-up, a portion of the fuel is passed through line 270 to line 274 leading to start-up heater 276 while another portion passes to reformer combustion chamber 202 through line 279. Excess hydrogen contained in the exhaust from anode 242 was fed to combustion chamber 202 through line 280. Air for combustion chamber 202 is compressed by compressor 282 and passes to combustion chamber 202 through line 286. Air for start-up heater 276 passes through line 286. While air for combustion of methanol passes through line 278, coolant circulating through start-up heater 276 and line 262 raises fuel cell 244 to proper operating temperature upon start-up. In steady operation, hydrogen produced in reformer tubes 214 is converted to electricity in fuel cell 244, exhaust hydrogen from anode 242 of fuel cell 244 is used to supply fuel value to combustion chamber 202, while heat rejected from fuel cell 244 is used to vaporize the methanol water feed.

From the above description of suitable means for conducting the method of the present invention, it will be clear that various alternatives exist for maintaining the heat balance during the practice of the reforming process of the present invention when integrated with a phosphoric acid fuel cell system of the type hereinbefore described. The selection of a particular mode of operation will be dictated by overall process economics prevalent with any particular $H_2$-air fuel cell system and the desire to maximize the production of gaseous hydrogen while operating under the most beneficial conditions of temperature and pressure.

The following examples are offered for a better understanding of the reforming process of the present invention, but the invention is not to be construed as limited thereto.

Example I

A mixture of air and hydrogen was separately fed to a burner equipped with a heating coil of the type shown in Figure 1 of the drawings. In separate runs, a water/methanol feedstock at molar feed ratios of 4.5 and 9.0 was preheated to a temperature of 482°C (900°F) in a mineral oil heated vaporizer 11. The preheated water/methanol feedstock was passed into heating coil 13 of burner 14 and superheated to 482°C (900°F) The water/methanol feedstock exited the burner at 482°C (900°F) and was passed into the inlet section of experimental subscale reformer 18 which consisted of a one-inch diameter pipe with a one foot long catalyst bed consisting of 206 grams of a ZnO/CuO combination catalyst on an alumina support. The composition of the catalyst of the type conventionally used for the water gas shift reaction comprised of 11.6% by weight Zn, 27.5% by weight Cu, and 29.9% by weight alumina. Reforming of the methanol in reformer 18 was accomplished at 101 kPa (14.7 psia) and a constant weight hourly space velocity of 1.5 grams (gm) methanol feed/gm catalyst/hour. Steam reforming took place within the catalyst bed with the heat being provided directly thereto by the superheated gases flowing through reformer 18.

In both runs, effluent samples collected from condenser 20 and analyzed for CO content using a gas chromatograph indicated that the carbon monoxide level was below the calibration range of the gas chromatograph (100 - 200 ppm).

The methanol conversion for the 4.5 and 9.0 water/molar feed ratios in the two runs was 84.6 and 96.2% respectively. The first order rate constants overall were 2.8 and 4.9 $hr^{-1}$ respectively. The projected weight hourly space velocities for the 4.5 and 9.0 water/molar feed ratios in the two runs to yield 99.8% methanol conversion was calculated to be 0.45 and 0.789 gm methanol feed/gm catalyst/hour respectively.

The temperature profile through the length of the reformer is shown in Table II below.

Table II

| Distance from Inlet of Catalyst Bed | Temperature of Bed $H_2O/CH_3OH$ molar ratio | |
|---|---|---|
| | 4.5 | 9.0 |
| 0 cm (0 in) | 482°C(900°F) | 482°C(900°F) |
| 5.08 cm (2 in ) | 438°C(820°F) | 416°C(780°C) |
| 10.16 cm (4 in) | 332°C (630°F) | 343°C (650°F) |
| 15.24 cm (6 in) | 304°C(580°F) | 327°C(620°F) |
| 20.32 cm (8 in) | 288°C(550°F) | 304°C(580°F) |
| 25.4 cm (10 in) | 271°C(520°F) | 288°C(550°F) |
| 30.48 cm (12 in) | 249°C(480°F) | 288°C(550°F) |
| 35.56 cm (14 in) | 232°C(450°F) | 271°C(520°F) |

The gaseous product exiting the reformer was cooled, collected and analyzed with a gas chromatograph (G.C.) during the course of the reforming reaction. The conversion results are summarized in Table III below.

Table III

| Run No. | $H_2O/CH_3OH$ Molar Ratio | Run Duration (Hours) | % Conversion of Methanol | | Gaseous Effluent Composition | | | |
|---|---|---|---|---|---|---|---|---|
| | | | Initial | Final | $H_2$ | $CO_2$ | CO | $CH_4$ |
| 1 | 4.5 | 4.0 | 84.6 | 84.6 | 80.2 | 19.8 | (1) | 0.0 |
| 2 | 9.0 | 4.0 | 96.2 | 96.2 | 72.75 | 27.25 | (1) | 0.0 |
| Control* | 1.3 | 4.0 | 98.5 | 99.5 | 74.0 | 24.0 | 2.0 | 0.0 |

* Typical results from conventional steam reforming of methanol at 274°C (525°F) reactant temperature.

(1) Less than G.C. detection, (100 - 200 ppm)

Example II

An experiment was conducted with a shell and tube type reactor in which the catalyst was divided into two sections. The first section extended 15.2 cm (six inches) from the inlet of the 13 reactor tubes. The second catalyst section extended the remaining 45.7 cm (18 inches) of the tubes to the outlet. The first section contained a low activity, high temperature resistant catalyst consisting of 978.0 grams of a zinc-chromium oxide catalyst composed of 55.0% by weight Zn, and 22.0% by weight chromium oxide. The second catalyst section contained 5884.0 grams of a high activity, low temperature catalyst consisting of ZnO/CuO combination with an alumina support; the catalyst comprised 11.6% by weight Zn, 27.5% by weight Cu, and 29.9% by weight alumina and was of the type conventionally used for the water-gas shift reaction.

The water/methanol feedstock molar ratio was 2.0. Effluent samples collected from condenser 20 and analyzed for CO level indicated a concentration varying from 0.5 to 2.0 weight percent. The methanol conversion was 99.5%. The first order rate constant was 2.44 gm methanol feed/gm catalyst/hour. The weight hourly space velocity was 0.46 gm methanol feed/gm catalyst/hour.

The temperature profile through the length of the reformer is shown in Table IV below. This illustrates the effect of the upper, high temperature catalyst section in protecting the lower, low temperature catalyst from the high inlet temperatures necessary to complete the reaction with an optimally sized reactor.

## Table IV

**Distance from Inlet of Catalyst Bed**             **Temperature of Bed**

### First Section

| Distance from Inlet of Catalyst Bed | Temperature of Bed |
|---|---|
| 0 cm (0.0 in) | 427°C (800.0°F) |
| 0.635 cm (0.25 in) | 316°C (600.0°F) |
| 3.81 cm (1.5 in) | 266°C (510.0°F) |
| 7.62 cm (3.0 in) | 260°C (500.0°F) |

### Second Section

| Distance from Inlet of Catalyst Bed | Temperature of Bed |
|---|---|
| 10.16 cm (4.0 in) | 210°C (410.0°F) |
| 30.48 cm (12.0 in) | 218°C (425.0°F) |
| 45.72 cm (18.0 in) | 227°C (440.0°F) |
| 66.04 cm (26.0 in) | 237°C (458.0°F) |

The conversion results are summarized in Table V below.

Table V

| % Conversion of Methanol | | Gaseous Effluent Composition (Mole %) | | | |
|---|---|---|---|---|---|
| Initial | Final | $H_2$ | $CO_2$ | CO | $CH_4$ |
| 98.5 | 99.5 | 74.75 | 24.24 | 1.01 | 0.0 |

8

### Example III

A mixture of methanol and water containing 1.3 moles of water per mole of methanol was preheated to 196°C (385°F), then superheated to 382°C (720°F). Five thousand five hundred (5500) ml/hr of the superheated mixture was passed through reformer tubes containing 6290 cc of a zinc oxide-copper oxide-alumina catalyst comprising 11.6 wt. % zinc, 27.5 wt. % copper and 29.2 wt. % alumina, having a specific gravity of 6050 g and a bulk density of 0.92 gm/cc. The space velocity within the reformer was therefore 0.469 $hr^{-1}$ on a mass basis (g/hr of methanol/g of catalyst) or 985 $hr^{-1}$ on the basis of volumes of $H_2$ in the feed per hour/catalyst volume. The reaction tubes were disposed within a shell heated by 14,000 g/hr of flue gases entering the shell at 477°C (890°F) and leaving at 286°C (547°F) yielding an average rate of heat input to the reformer of 21-8 MJ/hr (5200 kcal/hr). The average catalyst bed temperature was 279°C (535°F), and the temperature of the reactants leaving the reformer was 296°C (565°F). The conversion of methanol was essentially completely converted yielding 8,185 1. of gas at STP (standard temperature and pressure, ie 0°C and 101325 Pa) per hour having a composition of 73.4 mole % $H_2$, 24.0 mole % $CO_2$ and 2.6 mole % CO.

### Example IV

The procedure of Example I was repeated in a single tube laboratory scale reformer 1 in. in diameter by 12 in. long maintained at 525°F using a volumetric space velocity of 836 $hr^{-1}$ (cc of $H_2$ at STP per hour/cc of catalyst). The methanol conversion obtained was 98.48%. Analysis of the product gases indicated a composition of 74.8 mole % $H_2$, 24.0 mole % $CO_2$ and 1.21 mole % CO.

While specific components of the present system are defined in the working examples above, many other variables may be introduced which may in any way affect, enhance or otherwise improve the present invention. These are intended to be included herein.

While specific components of the present system are defined in the working examples above, many other variables may be introduced which may in any way affect, enhance or otherwise improve the present invention. These are intended to be included herein.

### Claims

1. A process for the production of hydrogen, said process comprising passing a gaseous feed mixture consisting essentially of methanol and water into a catalytic reactor over a catalyst bed, the improvement comprising superheating the gaseous mixture to a temperature between 371° and 593°C (between 700° and 1100°F) while controlling both the ratio of water vapour to methanol in, and the degree of superheat of, the gaseous feed mixture such that upon feeding the superheated gaseous mixture to the catalytic reactor and contacting it with the catalyst bed contained therein to produce hydrogen by an endothermic reaction of water and methanol over the catalyst bed, at least a major portion of the heat for the catalytic reaction is extracted from the superheated gaseous mixture.

2. The process of claim 1 wherein the water to methanol molar ratio in the gaseous mixture is between 1.0 and 10.0.

3. The process of claim 1 wherein the water to methanol molar ratio in the superheated gaseous feed mixture is between 2 and 9.

4. The process of any preceding claim wherein the feed mixture is superheated to a temperature between 427° and 593°C (between 800° and 1100°F).

5. The process of any preceding claim wherein the gaseous mixture is superheated to a temperature of 454° to 538°C (850° to 1000°F).

6. The process of any preceding claim including providing the hydrogen as a continuous supply of hydrogen fuel to a fuel cell system comprised of a heat exchanger, a burner, the catalytic reactor containing the catalyst bed for catalyzing the production of hydrogen from the gaseous feed mixture, and a fuel cell comprised of a fuel electrode, an oxygen electrode and an electrolyte disposed therebetween, wherein the heating of the feed mixture to a superheated state is carried out in the heat exchanger and the process further comprises:

(a) directing hydrogen produced in the catalytic reactor to the fuel electrode of the fuel cell,

(b) directing air into the oxygen electrode of the fuel cell to effect an electrochemical reaction to produce electricity, and

(c) exhausting the gaseous effluent from the fuel electrode, a portion of which is a combustible gas, burning the combustible portion of the fuel electrode exhaust in the burner, feeding the burner exhaust to the heat exchanger to supply heat for the superheating of the feed mixture whereby the gases exhausted from the fuel electrode supply the thermal energy, via combustion, to heat the feed mixture to the superheated state.

7. The process of claim 6 wherein a portion of the catalytic reactor exhaust is comprised of water which is condensed and recycled for use in the catalytic steam reforming reaction.

8. The process of claim 6 or claim 7 wherein the fuel cell electrolyte is phosphoric acid.

9. The process of any preceding claim wherein the catalyst bed is divided into a first section extending from the inlet of the reactor bed and a second section extending from the end of the first section to the outlet of the reactor bed, the first section containing a low activity, high temperature resistant steam reforming catalyst and the second containing a high activity steam reforming catalyst.

10. The process of claim 9 wherein the low activity catalyst is a combination of oxides of zinc and chromium comprised of 40% to 60% by weight Zn and 10% to 30% by weight Cr and the high activity catalyst is a combination of oxides of zinc and copper on alumina comprised of 5% to 20% by weight zinc, 20% to 35% by weight Cu and 20% to 40% by weight alumina.

11. The process of any of claims 1 to 8 wherein the catalyst in the catalyst bed is a combination of zinc oxide and chromium oxide on alumina.

12. The process of any of claims 1 to 8 wherein the catalyst bed comprises a low activity, high stability zinc oxide and chromium oxide catalyst comprised of 40 to 65 percent by weight Zn and about 10 to 30 percent by weight Cr followed by a high activity zinc oxide and copper oxide on alumina comprised of 5 to 20 percent by weight Zn, 20 to 35 percent by weight Cu, and 20 to 40 percent by weight alumina.

13. The process of any of claims 1 to 8 wherein the temperature and composition of the superheated feed mixture is sufficient to supply at least 90% of the heat required for reforming the methanol contained in said feed mixture by condensation, and the catalytic reactor is in the form of a tube having a length to diameter ratio of from 2 to 6, said catalyst bed comprising a low activity, high stability zinc oxide and chromium oxide catalyst comprised of 30 to 65 percent by weight Zn and 5 to 35 percent by weight Cr, followed by a high activity zinc oxide and copper oxide catalyst on alumina comprised of 5 to 20 percent by weight Zn, 15 to 40 percent by weight Cu, and 15 to 50 percent by weight alumina, the temperatures of said superheated mixture being between 425° and 600°C and the water to methanol ratio being between 2 and 9.

14. The process of any of claims 1 to 12 wherein the temperature and composition of the superheated feed mixture is sufficient to supply at least 75% of heat required for reforming the methanol contained in said mixture by condensation, and the catalytic reactor is in the form of a simple tube having a length to diameter ratio of less than 10 to 1.

15. An integrated methanol steam reformer, combustor chamber, and methanol superheater unit comprising:

means defining a combustion chamber having an inlet and an exhaust, said exhaust being connected to means defining a duct, superheater means for heating a mixture consisting essentially of methanol and water disposed within said combustion chamber, the outlet of said superheater means being operably connected to the inlet of a methanol heater/supply tube passing through said duct, a shell encompassing said duct adjacent said means defining a combustion chamber, said duct opening into the interior of said shell and a reformer chamber comprising a plurality of tubes operably connected to said methanol heater/supply tube disposed within said shell exterior to said duct, said tubes having a catalyst for steam reforming of methanol into a hydrogen rich gas disposed therein.

16. The apparatus of claim 15 further including:
a fuel cell comprising means defining an anode chamber and means defining a cathode chamber;
means for supplying hydrogen rich gas from said reformer to the anode chamber of said fuel cell;
means for recovering hydrogen from said anode chamber and employing said hydrogen to heat said mixture of methanol and water prior to its entry into said tubes disposed exterior to said duct; and means for recovering and condensing water from the anode chamber of said fuel cell and employing said water for cooling said fuel cell.

17. An integrated apparatus for the production of hydrogen and production of electricity therefrom comprising the apparatus of claim 15, and further comprising means for supplying said superheated gaseous mixture consisting essentially of methanol and water to said reforming chamber at such temperature that at least a major portion of the heat required for reforming said mixture is supplied by the heat contained within said gaseous superheated mixture, said temperature being between 371° and 593°C (between 700° and 1100°F); a fuel cell comprising means defining an anode chamber and means defining a cathode chamber; means for supplying hydrogen rich gas from said reforming chamber to said anode chamber, and means for recovering hydrogen from said anode chamber and employing said hydrogen to heat said mixture of methanol and water prior to its entry into said reforming chamber.

18. The apparatus of claim 17 wherein the reforming chamber is divided into a first section extending from the inlet of the chamber and a second section extending from the end of the first section to the outlet of the chamber, the first section containing a low activity, high temperature resistant steam reforming catalyst and the second section containing a high activity steam reforming catalyst.

19. The apparatus of claim 17 or claim 18 wherein the catalyst in the catalyst bed is a combination of zinc oxide and chromium oxide on alumina.

20. The apparatus of claim 18 wherein the low activity catalyst is a combination of oxides of zinc and alumina comprised of 40% to 60% by weight Zn and 10% to 30% by weight Cr and the high activity catalyst is a combination of oxides of zinc and copper on alumina comprised of 5% to 20% by weight Zn, 20% to 35% by weight Cu and 20% to 40% by weight alumina.

21. The apparatus of any of claims 17 to 20 further comprising means for maintaining the water/methanol molar ratio in the gaseous mixture between 1.0 and 10.0.

22. The apparatus of any of claims 17 to 21 wherein the temperature at which the gaseous superheated mixture of methanol and water is supplied to said reforming chamber is between 371° and 593°C (between 850° and 1100°F).

**Patentansprüche**

1. Verfahren zur Herstellung von Wasserstoff, welches das Überleiten eines gasförmigen Einsatzmaterialgemisches, das im wesentlichen aus Methanol und Wasser besteht, in einen katalytischen Reaktor über ein Katalysatorbett umfaßt, **dadurch gekennzeichnet**, daß es das Überhitzen des gasförmigen Gemisches auf eine Temperatur zwischen 371° und 593°C (zwischen 700° und 1100°F) umfaßt, wobei sowohl das Verhältnis des Wasserdampfs zum Methanol in dem gasförmigen Einsatzmaterialgemisch und das Ausmaß seiner Überhitzung derart geregelt werden, daß beim Zuführen des überhitzten gasförmigen Gemisches in den katalytischen Reaktor und beim In-Kontakt-bringen mit dem darin enthaltenen Katalysatorbett zum Erzeugen von Wasserstoff durch eine endotherme Reaktion von Wasser und Methanol über dem Katalysatorbett mindestens ein Hauptteil der Wärme für die katalytische Reaktion aus dem überhitzten gasförmigen Gemisch entnommen wird.

2. Verfahren nach Anspruch 1, worin das molare Verhältnis von Wasser zu Methanol in dem gasförmigen Gemisch zwischen 1,0 und 10,0 liegt.

3. Verfahren nach Anspruch 1, worin das molare Verhältnis von Wasser zu Methanol in dem überhitzten gasförmigen Einsatzmaterialgemisch zwischen 2 und 9 liegt.

4. Verfahren nach einem der vorhergehenden Ansprüche, worin das Einsatzmaterialgemisch auf eine Temperatur zwischen 427° und 593°C (zwischen 800° und 1100°F) überhitzt wird.

5. Verfahren nach einem der vorhergehenden Ansprüche, worin das gasförmige Gemisch auf eine Temperatur von 454° bis538°C (850° bis 1000°F) überhitzt wird.

6. Verfahren nach einem der vorhergehenden Ansprüche, welches einschließt das Bereitstellen des Wasserstoffs als eine kontinuierliche Zufuhr von Wasserstoffbrennstoff zu einem Brennstoffzellensystem, welches einen Wärmeaustauscher, einen Brenner, den katalytischen Reaktor, welcher das Katalysatorbett zum Katalysieren der Herstellung von Wasserstoff aus dem gasförmigen Einsatzmaterialgemisch enthält, und eine Brennstoffzelle, die eine Brennstoffelektrode, eine Sauerstoffelektrode und einen dazwischen befindlichen Elektrolyten umfaßt, umfaßt, worin das Erwärmen des Einsatzmaterialgemisches bis zu einem überhitzten Zustand in dem Wärmeaustauscher durchgeführt wird und das Verfahren weiterhin umfaßt:
a) Das Zuführen von in dem katalytischen Reaktor erzeugten Wasserstoff zu der Brennstoffelektrode der Brennstoffzelle,
b) das Zuführen von Luft in die Sauerstoffelektrode der Brennstoffzelle, um eine elektrochemische Reaktion zum Erzeugen von Elektrizität zu bewirken, und
c) das Abführen des gasförmigen Abflusses aus der Brennstoffelektrode, von dem ein Teil ein brennbares Gas ist, das Verbrennen des brennbaren Teils des Abgases der Brennstoffelektrode in dem Brenner, das Zuführen des Brennerabgases zu dem Wärmeaustauscher, um Wärme zum Überhitzen des Einsatzmaterialgemisches bereitzustellen, wodurch die aus der Brennstoffelektrode abgeleiteten Gase die thermische Energie durch Verbrennung bereitstellen, um das Einsatzmaterialgemisch bis zu dem überhitzten Zustand zu erwärmen.

7. Verfahren nach Anspruch 6, worin ein Teil des Abgases des katalytischen Reaktors Wasser umfaßt, welches kondensiert und zur Verwendung in der katalytischen Dampfreformierungsreaktion zurückgeführt wird.

8. Verfahren nach Anspruch 6 oder Anspruch 7, worin der Brennstoffzellenelektrolyt Phosphorsäure ist.

9. Verfahren nach einem der vorhergehenden Ansprüche, worin das Katalysatorbett in einen ersten Abschnitt, der sich vom Einlaß des Reaktorbetts erstreckt und einen zweiten Abschnitt, der sich vom Ende des ersten Abschnitts bis zum Auslaß des Reaktorbetts erstreckt, eingeteilt ist, wobei der erste Abschnitt einen hochtemperaturbeständigen Dampfreformierungskatalysator mit niedriger Aktivität und der zweite Abschnitt einen Dampfreformierungskatalysator mit hoher Aktivität enthält.

10. Verfahren nach Anspruch 9, worin der Katalysator mit niedriger Aktivität eine Kombination von Oxiden von Zink und Chrom ist, die 40 bis 60 Gew.-% Zn und 10 bis 30 Gew.-% Cr umfaßt, und der Katalysator mit hoher Aktivität eine Kombination von Oxiden von Zink und Kupfer auf Aluminiumoxid ist, die 5 bis 20 Gew.-% Zink, 20 bis 35 Gew.-% Cu und 20 bis 40 Gew.-% Aluminiumoxid umfaßt.

11. Verfahren nach einem der Ansprüche 1 bis 8, worin der Katalysator in dem Katalysatorbett eine Kombination von Zinkoxid und Chromoxid auf Aluminiumoxid ist.

12. Verfahren nach einem der Ansprüche 1 bis 8, worin das Katalysatorbett einen Zinkoxid- und Chromoxidkatalysator mit niedriger Aktivität und hoher Stabilität umfaßt, welcher 40 bis 65 Gew.-% Zn und etwa 10 bis 30 Gew.-% Cr umfaßt, gefolgt von einem Zinkoxid und Kupferoxid auf Aluminiumoxid mit hoher Aktivität, welcher 5 bis 20 Gew.-% Zn, 20 bis 35 Gew.-% Cu und 20 bis 40 Gew.-% Aluminiumoxid umfaßt.

13. Verfahren nach einem der Ansprüche 1 bis 8, worin die Temperatur und Zusammensetzung des überhitzten Einsatzmaterialgemisches ausreichend ist, um mindestens 90-% der Wärme, die zum Reformieren des in dem Einsatzmaterialgemisch enthaltenen Methanols erforderlich ist, durch Kondensation bereitzustellen, und der katalytische Reaktor in Form eines Rohrs mit einem Verhältnis der Länge zum Durchmesser von 2 bis 6 vorliegt, wobei das Katalysatorbett einen Zinkoxid- und Chromoxidkatalysator mit niedriger Aktivität und hoher Stabilität umfaßt, welcher 30 bis 65 Gew.-% Zn und 5 bis 35 Gew.-% Cr umfaßt, gefolgt von einem Zinkoxid- und Kupferoxidkatalysator mit hoher Aktivität auf Aluminiumoxid, welcher 5 bis 20 Gew.-% Zn, 15 bis 40 Gew.-% Cu und 15 bis 50 Gew.-% Aluminiumoxid umfaßt, wobei die Temperaturen des überhitzten Gemisches zwischen 425° und 600°C liegen und das Verhältnis von Wasser zu Methanol zwischen 2 und 9 liegt.

14. Verfahren nach einem der Ansprüche 1 bis 12, worin die Temperatur und Zusammensetzung des überhitzten Einsatzmaterialgemisches ausreichend ist, um mindestens 75% der Wärme, die zum Reformieren des in dem Gemisch enthaltenen Methanols erforderlich ist, durch Kondensation bereitzustellen, und der katalytische Reaktor in Form eines einfachen Rohrs mit einem Verhältnis der Länge zum Durchmesser von weniger als 10:1 vorliegt.

15. Eine integrierte Methanoldampfreformierungs-, Brennkammer- und Methanolüberhitzungseinheit, welche umfaßt:
Mittel, die eine Brennkammer mit einem Einlaß und einem Auslaß definieren, wobei der Auslaß an Mittel angeschlossen ist, die eine Leitung definieren, Überhitzungsmittel zum Erwärmen eines Gemisches, das im wesentlichen aus Methanol und Wasser besteht, welche sich innerhalb dieser Verbrennungskammer befinden, wobei der Auslaß des Überhitzungsmittels betriebsfähig an den Einlaß eines Methanolerhitzer/Zufuhrrohrs angeschlossen ist, welches durch diese Leitung hindurchgeht, eine Hülle, welche die Leitung umschließt, die den Mitteln, die eine Brennkammer definieren, benachbart ist, wobei die Leitung sich in das Innere der Hülle hinein öffnet und eine Reformierungskammer, die eine Mehrzahl von Rohren umfaßt, die betriebsfähig an das Methanolerhitzer/Zufuhrrohr angeschlossen sind, die innerhalb der Hülle außerhalb der Leitung angeordnet sind, wobei die Rohre einen Katalysator zum Dampfreformieren von Methanol zu einem wasserstoffreichen Gas darin angebracht haben.

16. Vorrichtung nach Anspruch 15, die weiterhin einschließt:
Eine Brennstoffzelle, die Mittel umfaßt, die eine Anodenkammer definieren und Mittel, die eine Kathodenkammer definieren;
Mittel zum Zuführen von wasserstoffreichem Gas aus dem Reformer in die Anodenkammer der Brennstoffzelle;
Mittel zum Gewinnen von Wasserstoff aus der Anodenkammer und zum Einsetzen des Wasserstoffs, um das Gemisch aus Methanol und Wasser vor seinem Eintritt in die Rohre, die außerhalb der Leitung angebracht sind, zu erwärmen; und
Mittel zum Gewinnen und Kondensieren von Wasser aus der Anodenkammer der Brennstoffzelle und zum Einsetzen des Wassers zum Kühlen der Brennstoffzelle.

17. Integrierte Vorrichtung zur Herstellung von Wasserstoff und zur Erzeugung von Elektrizität daraus, umfassend die Vorrichtung nach Anspruch 15, und weiter umfassend Mittel zum Zuführen des überhitzten gasförmigen Gemisches, das im wesentlichen aus Methanol und Wasser besteht, zu der Reformierungskammer bei einer solchen Temperatur, daß mindestens ein Hauptteil der Wärme, die zum Reformieren des Gemisches erforderlich ist, durch die in dem gasförmigen überhitzten Gemisch enthaltene Wärme bereitgestellt wird, wobei die Temperatur zwischen 371° und 593°C (zwischen 700° und 1100°F) liegt; eine Brennstoffzelle, die Mittel, die eine Anodenkammer definieren und Mittel, die eine Kathodenkammer definieren, umfaßt; Mittel zum Zuführen von wasserstoffreichem Gas aus der Reformierungskammer zu der Anodenkammer und Mittel zum Gewinnen von Wasserstoff aus der Anodenkammer und zum Einsetzen des Wasserstoffs zum Erwärmen des Gemisches aus Methanol und Wasser vor seinem Eintritt in die Reformierungskammer.

18. Vorrichtung nach Anspruch 17, worin die Reformierungskammer in einen ersten Abschnitt, der sich vom Einlaß der Kammer erstreckt und einen zweiten Abschnitt, der sich vom Ende des ersten Abschnitts bis zum Auslaß der Kammer erstreckt, eingeteilt ist, wobei der erste Abschnitt einen hochtemperaturbeständigen Dampfreformierungskatalysator mit niedriger Aktivität und der zweite Abschnitt einen Dampfreformierungskatalysator mit hoher Aktivität enthält.

19. Vorrichtung nach Anspruch 17 oder Anspruch 18, worin der Katalysator in dem Katalysatorbett eine Kombination von Zinkoxid und Chromoxid auf Aluminiumoxid ist.

20. Vorrichtung nach Anspruch 18, worin der Katalysator mit niedriger Aktivität eine Kombination von Oxiden von Zink und Aluminiumoxid ist, die 40 bis 60 Gew.-% Zn und 10 bis 30 Gew.-% Cr umfaßt, und der Katalysator mit hoher Aktivität eine Kombination von Oxiden von Zink und Kupfer auf Aluminiumoxid ist, die 5 bis 20 Gew.-% Zn, 20 bis 35 Gew.-% Cu und 20 bis 40 Gew.-% Aluminiumoxid umfaßt.

21. Vorrichtung nach einem der Ansprüche 17 bis 20, die weiter Mittel zum Aufrechterhalten des molaren Verhältnisses von Wasser/Methanol in dem gasförmigen Gemisch zwischen 1,0 und 10,0 umfaßt.

22. Vorrichtung nach einem der Ansprüche 17 bis 21, worin die Temperatur, bei der das gasförmige überhitzte Gemisch aus Methanol und Wasser der Reformierungskammer zugeführt wird, zwischen 371° und 593°C (zwischen 850° und 1100°F) liegt.

**Revendications**

1. Procédé de production d'hydrogène, ledit procédé comprenant le passage d'un mélange d'alimentation gazeux constitué essentiellement par du méthanol et par de l'eau dans un réacteur catalytique sur un lit de catalyse, le perfectionnement comprenant la surchauffe du mélange gazeux jusqu'à une température qui se situe entre 371° C et 593° C (entre 700° F et 1100° F) tout en contrôlant à la fois le rapport vapeur d'eau sur méthanol dans le mélange d'alimentation gazeux et le degré de surchauffe de ce mélange de telle sorte que suite à l'alimentation du mélange gazeux surchauffé dans le réacteur catalytique et suite à sa mise en contact avec le lit de catalyse contenu dedans pour produire de l'hydrogène au moyen d'une réaction endothermique de l'eau et du méthanol sur le lit de catalyse, au moins une partie essentielle de la chaleur en provenance de la réaction catalytique soit extraite du mélange gazeux surchauffé.

2. Procédé selon la revendication 1, dans lequel le rapport molaire eau sur méthanol dans le mélange gazeux se situe entre 1,0 et 10,0.

3. Procédé selon la revendication 1, dans lequel le rapport molaire eau sur méthanol dans le mélange d'alimentation gazeux surchauffé se situe entre 2 et 9.

4. Procédé selon l'une quelconque des revendications précédentes, dans lequel le mélange d'alimentation est surchauffé jusqu'à une température qui se situe entre 427° C et 593° C (entre 800° F et 1100° F).

5. Procédé selon l'une quelconque des revendications précédentes, dans lequel le mélange gazeux est surchauffé jusqu'à une température de 454° C à 538° C (850° F à 1000° F).

6. Procédé selon l'une quelconque des revendications précédentes, incluant la fourniture de l'hydrogène en tant qu'alimentation continue de combustible hydrogène dans un système de pile à combustible constituée par un échangeur thermique, par un brûleur, par le réacteur catalytique qui contient le lit de catalyse pour catalyser la production d'hydrogène à partir du mélange d'alimentation gazeux et par une pile à combustible constituée par une électrode à combustible, par une électrode à oxygène et par un électrolyte disposé entre, dans lequel le chauffage du mélange d'alimentation jusqu'à un état surchauffé est mis en oeuvre dans l'échangeur thermique et le procédé comprend en outre :
   (a) l'action de diriger l'hydrogène produit dans le réacteur catalytique jusqu'à l'électrode à combustible de la pile à combustible ;
   (b) l'action de diriger de l'air dans l'électrode à oxygène de la pile à combustible afin de réaliser une réaction électrochimique pour produire de l'électricité ; et
   (c) l'évacuation de l'effluent gazeux hors de l'électrode à combustible, une partie de cet effluent étant du gaz combustible, la combustion de la partie combustible de l'évacuation hors de l'électrode à combustible dans le brûleur, l'alimentation de l'évacuation de brûleur dans l'échangeur thermique pour appliquer de la chaleur afin de surchauffer le mélange d'alimentation d'où il résulte que les gaz évacués hors de l'électrode à combustible appliquent de l'énergie thermique via la combustion afin de chauffer le mélange d'alimentation jusqu'à l'état surchauffé.

7. Procédé selon la revendication 6, dans lequel une partie de l'évacuation de réacteur catalytique est constituée par de l'eau qui est condensée et recyclée en vue d'une utilisation lors de la réaction de reformage de vapeur catalytique.

14

**8.** Procédé selon la revendication 6 ou 7, dans lequel l'électrolyte de pile à combustible est de l'acide phosphorique.

**9.** Procédé selon l'une quelconque des revendications précédentes, dans lequel le lit catalytique est divisé en une première section s'étendant depuis l'entrée du lit de réacteur et en une seconde section s'étendant depuis l'extrémité de la première section jusqu'à la sortie du lit de réacteur, la première section contenant un catalyseur de reformage de vapeur résistant aux températures élevées et à faible activité et la seconde section contenant un catalyseur de reformage de vapeur à activité élevée.

**10.** Procédé selon la revendication 9, dans lequel le catalyseur à faible activité est une combinaison d'oxydes de zinc et de chrome constituée par 40% à 60% par unité de poids de Zn et par 10% à 30% par unité de poids de Cr et le catalyseur à activité élevée et une combinaison d'oxydes de zinc et de cuivre sur alumine constituée par 5% à 20% par unité de poids de zinc, par 20% à 35% par unité de poids de Cu et par 20% à 40% par unité de poids d'alumine.

**11.** Procédé selon l'une quelconque des revendications 1 à 8, dans lequel le catalyseur contenu dans le lit catalytique est une combinaison d'oxyde de zinc et d'oxyde de chrome sur alumine.

**12.** Procédé selon l'une quelconque des revendications 1 à 8, dans lequel le lit catalytique comprend un catalyseur d'oxyde de zinc et d'oxyde de chrome à stabilité élevée et à faible activité constitué par 40 à 65% par unité de poids de Zn et par environ 10 à 30% par unité de poids de Cr suivi par un oxyde de zinc à activité élevée et par un oxyde de cuivre sur alumine constitués par 5 à 20% par unité de poids de Zn, par 20 à 35% par unité de poids de Cu et par 20 à 40% par unité de poids d'alumine.

**13.** Procédé selon l'une quelconque des revendications 1 à 8, dans lequel la température et la composition du mélange d'alimentation surchauffé suffit à appliquer au moins 90% de la chaleur requise pour reformer le méthanol contenu dans ledit mélange d'alimentation par condensation et le réacteur catalytique se présente sous la forme d'un tube présentant un rapport longueur sur diamètre qui va de 2 à 6, ledit lit catalytique comprenant un catalyseur d'oxyde de zinc et d'oxyde de chrome à stabilité élevée constitué par 30 à 65% par unité de poids de Zn et par 5 à 35% par unité de poids de Cr suivi par un catalyseur d'oxyde de zinc et d'oxyde de cuivre à activité élevée sur alumine constitué par 5 à 20% par unité de poids de Zn, par 15 à 40% par unité de poids de Cu et par 15 à 50% par unité de poids d'alumine, les températures dudit mélange surchauffé se situant entre 425° C et 600° C et le rapport eau sur méthanol se situant entre 2 et 9.

**14.** Procédé selon l'une quelconque des revendications 1 à 12, dans lequel la température et la composition du mélange d'alimentation surchauffé suffit à appliquer au moins 75% de la chaleur requise pour reformer le méthanol contenu dans ledit mélange par condensation et le réacteur catalytique se présente sous la forme d'un simple tube présentant un rapport longueur sur diamètre inférieur à une valeur se situant entre 10 et 1.

**15.** Unité intégrée de dispositif de reformage de vapeur de méthanol, de chambre de combustion et de surchauffeur de méthanol comprenant :
un moyen définissant une chambre de combustion comportant une entrée et une évacuation, ladite évacuation étant connectée à un moyen définissant un conduit, à un moyen de surchauffeur pour chauffer un mélange constitué essentiellement par du méthanol et par de l'eau disposé à l'intérieur de la chambre de combustion, la sortie dudit moyen de surchauffeur étant connectée de façon opérationnelle à l'entrée d'un tube de dispositif de chauffage/alimentation de méthanol traversant ledit conduit, une coquille englobant ledit conduit étant adjacente audit moyen définissant une chambre de combustion, ledit conduit débouchant à l'intérieur de ladite coquille et une chambre de reformage comprenant une pluralité de tubes connectés de façon opérationnelle audit tube de dispositif de chauffage/alimentation de méthanol disposé à l'intérieur de ladite coquille à l'extérieur dudit conduit, lesdits tubes comportant un catalyseur pour reformer par vapeur du méthanol dans un gaz riche en hydrogène disposé dedans.

**16.** Appareil selon la revendication 15, incluant en outre :
une pile à combustible comprenant un moyen définissant une chambre d'anode et un moyen définissant une chambre de cathode ;

EP 0 206 608 B1

un moyen pour appliquer un gaz riche en hydrogène depuis ledit dispositif de reformage dans la chambre d'anode de ladite pile à combustible ;

un moyen pour récupérer de l'hydrogène depuis ladite chambre d'anode et pour utiliser ledit hydrogène pour chauffer ledit mélange constitué par du méthanol et par de l'eau avant son entrée dans lesdits tubes disposés à l'extérieur dudit conduit ; et

un moyen pour récupérer et condenser de l'eau en provenance de la chambre d'anode de ladite pile à combustible et pour utiliser ladite eau pour refroidir ladite pile à combustible.

17. Appareil intégré pour la production d'hydrogène et pour la production d'électricité à partir de l'hydrogène, comprenant l'appareil de la revendication 15 et comprenant en outre un moyen pour appliquer un mélange gazeux surchauffé constitué essentiellement par du méthanol et par de l'eau dans ladite chambre de reformage à une température telle qu'au moins une partie principale de la chaleur requise pour reformer ledit mélange soit appliquée par la chaleur contenue à l'intérieur dudit mélange surchauffé gazeux, ladite température se situant entre 371° C et 593° C (entre 700° F et 1100° F) ; une pile à combustible comprenant un moyen définissant une chambre d'anode et un moyen définissant une chambre de cathode ; un moyen pour appliquer un gaz riche en hydrogène depuis ladite chambre de reformage dans ladite chambre d'anode et un moyen pour récupérer l'hydrogène en provenance de ladite chambre d'anode et pour utiliser ledit hydrogène pour chauffer ledit mélange de méthanol et d'eau avant son entrée dans ladite chambre de reformage.

18. Appareil selon la revendication 17, dans lequel la chambre de reformage est divisée en une première section s'étendant depuis l'entrée de la chambre et en une seconde section s'étendant depuis l'extrémité de la première section jusqu'à la sortie de la chambre, la première section contenant un catalyseur de reformage de vapeur résistant aux températures élevées et à faible activité et la seconde section contenant un catalyseur de reformage de vapeur à activité élevée.

19. Appareil selon la revendication 17 ou 18, dans lequel le catalyseur contenu dans le lit catalytique est une combinaison d'oxyde de zinc et d'oxyde de chrome sur alumine.

20. Appareil selon la revendication 18, dans lequel le catalyseur à faible activité est une combinaison d'oxydes de zinc et d'alumine constituée par 40% à 60% par unité de poids de Zn et par 10% à 30% par unité de poids de Cr et le catalyseur à activité élevée est une combinaison d'oxydes de zinc et de cuivre sur alumine constitué par 5% à 20% par unité de poids de Zn, par 20% à 35% par unité de poids de Cu et par 20% à 40% par unité de poids d'alumine.

21. Appareil selon l'une quelconque des revendications 17 à 20, comprenant en outre un moyen pour maintenir le rapport molaire eau sur méthanol dans le mélange gazeux entre 1,0 et 10,0.

22. Appareil selon l'une quelconque des revendications 17 à 21, dans lequel la température à laquelle le mélange surchauffé gazeux de méthanol et d'eau est appliqué dans ladite chambre de reformage se situe entre 371° C et 593° C (entre 850° F et 1100° F).

16

# FIG. 1

# FIG. 2

FIG. 3

FIG. 4

FIG. 5

FIG. 6

EP 0 206 608 B1